# EUROPEAN PATENT APPLICATION

(11) **EP 2 228 264 A1**
(43) Date of publication of application: **15.09.2010**
(21) Application number: 10151625.0
(22) Date of filing: 26.01.2010
(51) Int. Cl.: B60R 13/07, B60R 15/00, B62D 25/07

(54) **Caravan or motor home with device for discharging water**

(30) Priority: 11.03.2009 IT FI20090014 U
(71) Applicant: Laika Caravans S.r.l., 50028 Tavarnelle Val di Pesa (Firenze) (IT)
(72) Inventor: Viciani, Roberto, 50028 Tavarnelle Val di Pesa (Firenze) (IT)
(74) Representative: Bardini, Marco Luigi

(57) **Abstract**

The present invention refers to a vehicle such as a caravan or a motor home comprising a living cabin (1) with a covering (4a, 5) defined between two body sides (6) wherein in said covering (4a, 5) at least one opening (10) is formed that is intended for discharge of liquids

## Description

The present invention concerns the field of caravans and motor homes, and in particular it regards a device for discharging water intended for this kind of vehicle.

As known, motor homes and caravans are vehicles designed, created and equipped to allow the occupants to live inside them. Unlike caravans, consisting of a trailer-pulled living space that must necessarily be hauled by a motor vehicle, the motor home is a self-propelled vehicle having an autonomous engine and driving system, and its living space is built on top of the motorized frame of a commercial van.

Motor homes can be split into four basic categories depending on the type of living space: the so-called coachbuilt type in which the living space extends above the driving cab to allow further bed spaces to be included, semi-integral or profiled ones, in which, instead of the cab-over, a simple preformed dome is provided for aerodynamically joining the living space to the volume of the driving cab, motor homes in which the living space is a single body with the motorised frame, and pure camper vans that are nothing more than vans equipped on the inside to allow people to live inside them.

These vehicles are generally used for long journeys for which reason, over the years, it has always been sought to improve their comfort so as to approach the functionality and comfort of a house. However, this search has not always been accompanied by a careful consideration of the problems that such improvements can bring about outside of the living space.

The search for an increasingly impressive and modern design not just of the interior but also of the exterior of these vehicles can create practical problems that require innovative interventions.

In particular, in coachbuilt motor-homes, it is more and more frequent to remarkably raise the front area containing the cab-over, so as to increase the available living space for the occupants. This has meant that concave areas are formed on the roof of the living space, at the junction between the aforementioned cab-over, the top surface of the remaining part of the living space, usually having a slight inclination, and the lateral joining profiles of the body side.

Such areas are subject to stagnation of water due to atmospheric agents, said stagnation, in the long run, being a potential source of damage to the materials of the living space, through phenomena of corrosion and/or infiltration, in addition being visually unpleasant, even with possible formation of bad smells.

The object of the present invention is to tackle such problem by providing a device capable of preventing stagnation of water, in particular in the aforementioned concave areas, ensuring that the top of the living space of a caravan or motor home is dry and clean in all circumtances of use.

According to the present invention, this and other objects are accomplished with a vehicle such as a caravan or a motor home comprising a living cabin with a covering defined between two body sides, **characterised in that** at least one opening intended for discharging liquids is formed in the covering.

In a preferred embodiment, the at least one opening is formed in correspondence with at least one concave area of the covering.

The characteristics and advantages of the caravan or motor home according to the present invention will become clearer from the following description of an embodiment thereof, given as an example and not for limiting purposes, with reference to the attached drawings, in which:

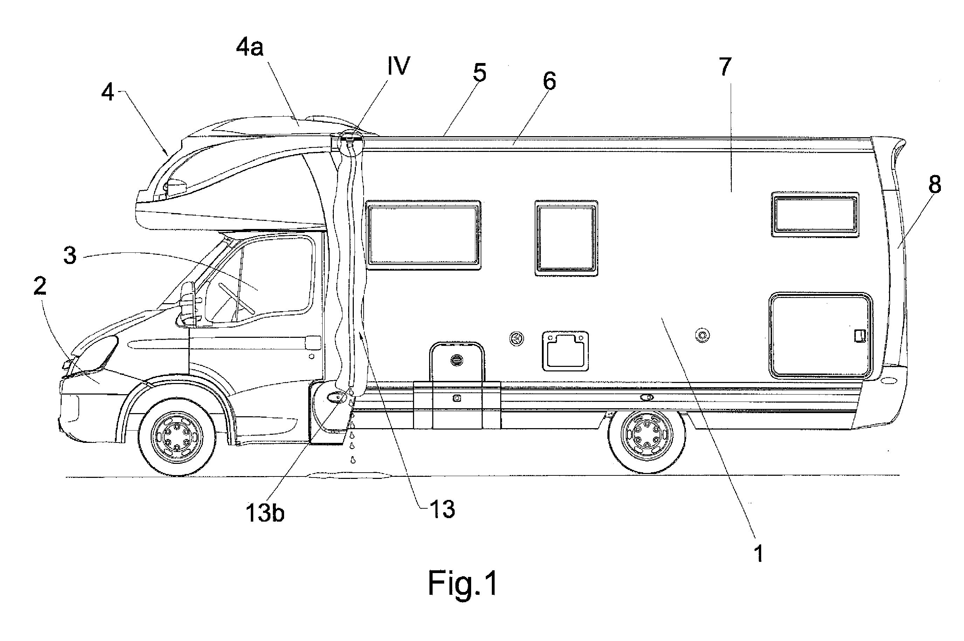

- figure 1 represents a side view of a coachbuilt motor home, in section in the area of the device according to the invention;
- figure 2 is a top view of the motor home of figure 1 in the area of the cab-over;
- figure 3 represents an enlargement of the portion delimited by the circle III of figure 2, showing the top part of the discharge device according to the invention; and
- figure 4 shows the top part of the discharge device in longitudinal section, according to the enlargement of the portion delimited by the circle IV of figure 1.

With reference to the above figures, the invention can be exploited in a living cabin of a caravan or motor home having *per se* conventional overall characteristics, comprising in fact a living cabin 1 mounted on a frame 2 with a driving cab 3.

In particular, in the illustrated example, the living cabin 1 of a coachbuilt motor home comprises a cab-over 4 with a convex top 4a, arranged over the driving cab 3. The remaining part of the living cabin 1 comprises therefore a roof covering 5, body sides 7 that define the side walls of the living cabin, a rear wall 8, and lateral joining profiles 6 between the body sides 7 and the roof 5.

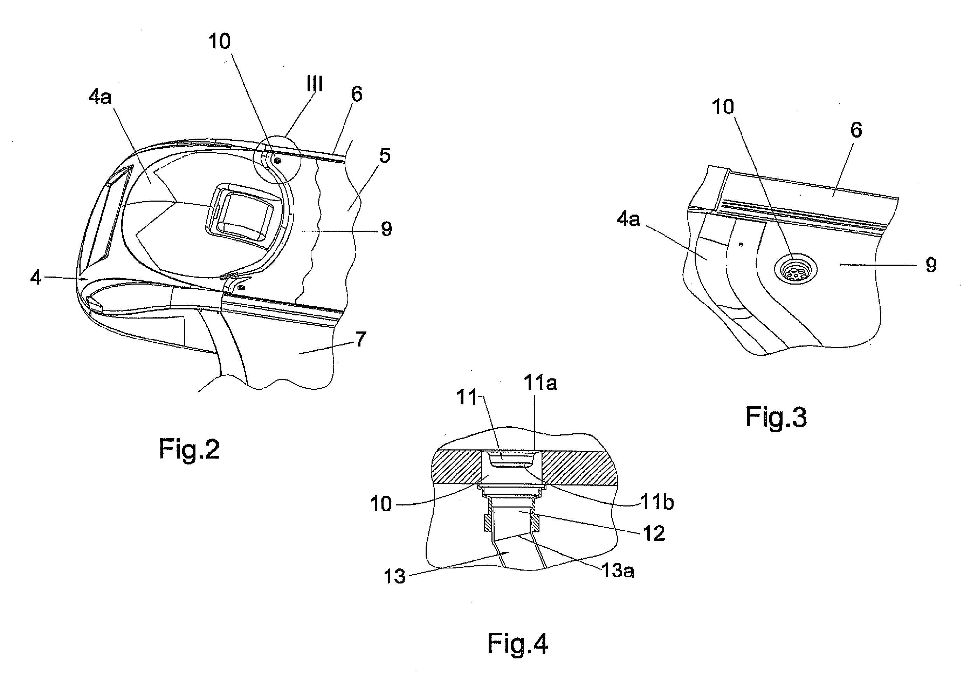

Between the covering 4a of the cab-over 4 and the roof covering 5, overall defining a covering of the living cabin 1, due to mutually opposite slopes, a concave area 9 is formed. Such area is defined at its sides by the joining profiles 6, in turn raised over the covering 5. In the area 9 one or more openings 10 are formed, in the illustrated example two openings in positions corresponding to the maximum depression, which, as can be seen in particular in figure 2, are adjacent to respective profiles 6.

Each opening 10 has a circular profile and houses a flow-permeable element 11 with a concave interior having a frusto-conical shape. The element 11 has a top peripheral edge 11 a laying on the roof 5, and a grid-like lower base 11 b to allow water to run-off, at the same time filtering the debris that could causes blockages as further explained hereafter.

The opening 10 is connected, through a fitting 12 consisting of a plurality of elements with cylindrical section having decreasing diameter starting from the same opening, to a first end 13a of a discharge pipe 13 extending vertically downwards for the entire elevation of the relative body side 7 and having a second end 13b on the bottom side of the living cabin, allowing water to be discharged to the ground in the area below the motor home. The discharge pipe 13 is therefore embedded in the relative body side or in any case located into or behind it, according to construction techniques commonly used in the field.

From the above it is clear that, thanks to the device according to the invention, the humidity that can deposit on the top part of the living cabin 1, collected in the concave area 9, is conveyed by the openings 10 and discharged to the ground through the discharge pipe 13. As mentioned, the element 11 acts as a filter, for which reason possible blocking elements such as leaves, twigs, dirt, etc. can be easily removed with simple cleaning operations, either manually or through commonly available tools. Therefore, cleaning is ensured and at the same time the damage referred to above with regard to known caravans or motor homes is prevented. The purpose of the invention is thus fully accomplished, with a structurally basic provision that does not require intervention on the appearance and on the comfort of the living space.

Although in the present description reference has been made to a coachbuilt motor home with a single concave area, it is clear that the invention can also be applied to any other type of motor homes, like semi-integrated ones or camper vans, and to caravans without any limitation to the number of concave areas. More generally, living cabins with a completely flat covering can also take advantage of the use of the device. The number of openings to be applied on the top part of the living space, just like their location, can vary based on the configuration of the (optional) concave areas. The discharging of the water to the ground should also not be considered to be the only solution that can be applied since, for example, it can be considered to recover the discharged water by recovery means comprising distillers, pumps and/or tanks in order to use it for domestic uses after suitable water conditioning.

The present invention has been here described with reference to a preferred embodiment. It should be understood that there may be other embodiments within the same inventive concept, as defined by the scope of protection of the following claims.

## Claims

1. A vehicle such as a caravan or a motor home comprising a living cabin (1) with a covering (4a, 5) defined between two body sides (6) **characterised in that** it comprises at least one opening (10) formed in said covering (4a, 5), and liquid discharge means (12, 13) connected with said opening (10) for discharging liquids from said covering.

2. The vehicle according to claim 1, wherein said at least one opening (10) is formed in correspondence with at least one concave area (9) of said covering (4a, 5)

3. The vehicle according to claim 2, wherein said vehicle is a motor home, said at least one concave area (9) being formed between a covering (4a) of a cab-over (4) and a roof (5) of the remaining part of the living cabin.

4. The vehicle according to any of the previous claims, wherein in said at least one opening (10) filtering means (11) are placed for filtering the debris that could cause blockages.

5. The vehicle according to any of the previous claims, wherein said discharge means comprise a discharge pipe (13) extending vertically downwards substantially for the entire elevation of the relative body side (7), between a first end (13a) at said opening (10) and a second end (13b) on the bottom side of the living cabin allowing said liquids to be discharged to the ground.

6. The vehicle according to any of the previous claims, wherein said discharge means (12, 13) are associated with recovery means for recovering said liquids.

7. The vehicle according to claim 6, wherein said recovery means comprises water conditioning means.

8. The vehicle according to claim 6 or 7, wherein said recovery means comprise distillers, pumps and/or tanks.
